# EUROPEAN PATENT APPLICATION

(11) **EP 3 203 103 A1**
(43) Date of publication of application: **09.08.2017**
(21) Application number: 17150359.2
(22) Date of filing: 05.01.2017
(51) Int. Cl.: F16D 65/12

(54) **BRAKE DISC**

(30) Priority: 08.01.2016 GB 201600317
(71) Applicant: Triumph Designs Limited, Hinckley, Leicestershire LE10 3BZ (GB)
(72) Inventor: HETZEL, Nicholas John, Hinckley, Leicestershire LE10 3BZ (GB)
(74) Representative: Somervell, Thomas Richard

(57) **Abstract**

A brake disc (1) comprises a carrier (12) for fixing to a motorcycle wheel and an annular rotor (14) located radially outwardly of, and arranged coaxially with, the carrier (12) for engaging with a pair of brake pads. A coupling arrangement (16, 20) is disposed between the carrier (12) and the rotor (14) and is configured to support the rotor (14) on the carrier (12) such that limited relative axial movement between the rotor and the carrier can occur. A biasing means (18) is configured to act radially to bias the rotor (14) away from the carrier (12). The biasing means (18) is disposed between the coupling element (16, 20) and at least one of the carrier (12) and the rotor (14).

## Description

### Field of the Invention

This invention relates to a brake disc. Particularly, but not exclusively, the invention relates to a brake disc on a motorcycle.

### Background to the Invention

Disc brakes are used extensively in motorcycles and other forms of engine driven vehicles. A disc brake is a type of brake which uses callipers to squeeze pairs of pads against a disc in order to create friction that slows down the rotation of a wheel. Traditionally higher performance brake discs for motorcycles are made from two main parts to reduce weight and allow for thermal expansion. These are known as floating brake discs as the external part (rotor) which is engaged by the brake pads floats separately from a central part (carrier) fixed to the wheel, i.e. there is a gap between the two parts. This means that when the rotor is subjected to frictional heat it can expand and contract again unconstrained from its mounting which limits mechanical stresses due to thermal expansion. This allows discs to be made which are thinner and therefore lighter, as thicker material which helps prevent warping is not required. Further, the carrier can also be made from a less dense material, such as aluminium.

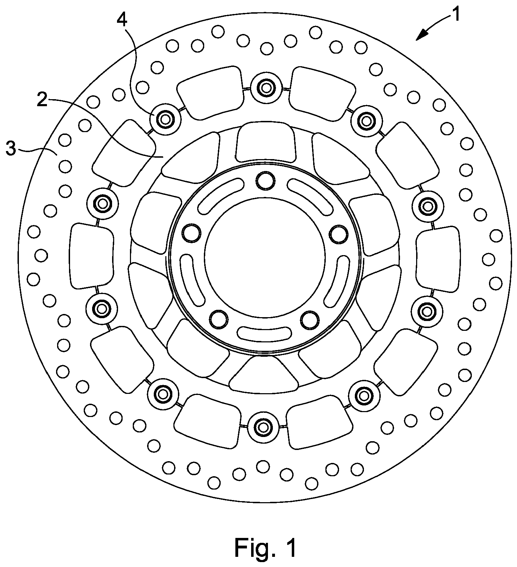

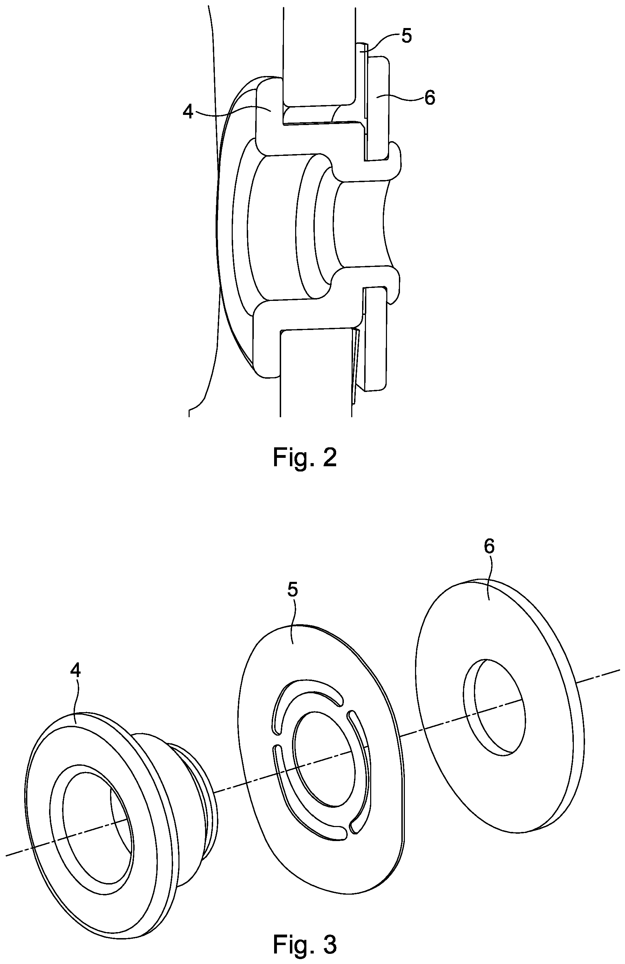

An exemplary known floating brake disc 1 is shown in Figures 1 and 2 and comprises an aluminium carrier 2 and a stainless steel rotor 3 which are joined by a number of circular bobbins 4 fitted into opposing semi-circular features in the rotor 3 and carrier 2. The carrier 2 is rigidly fixed to a wheel and the rotor 3 is located radially outwardly of, and coaxial with, the carrier 2. The brake pads are pressed against the rotor 3 when the brake is activated and the friction between the pads and the rotor 3 acts to slow the rotation of the rotor 3. The bobbins 4 transmit the torque between the rotor 3 and the carrier 2 and support the rotor 3 in the correct axial and radial position relative to the carrier 2.

Typically, as shown in Figures 2 and 3, the bobbins 4 are fitted with an axial spring 5, (which is either conical or wavy), to hold the carrier 2 and the rotor 3 in set position. However, the bobbins 4 also allow for small axial movements should they be needed, such as allowing for the installed run out of the disc on the wheel. A washer 6 is used to hold the bobbin 4 in place with the spring 5. The spring 5 also adds some friction to prevent the rotor 3 from rattling on the bobbins 4 and carrier 2 when the wheel rotates and the brake is not applied. Conical springs, some having a petal shape, of varying stiffness can be used and wavy springs can be used when a low spring force is required.

Brake discs are known to suffer from disc thickness variation (DTV) as they wear with service, which can lead to brake judder. This is where the variation in the disc thickness causes varying brake torque which in turn can cause resonance of the front forks of a motorcycle at specific vehicle speeds.

EP 1,683,984 A1 discloses a vehicle disc brake system, in which elastically deformable annular elements are disposed between cylindrical pawls, or bobbins, and the associated hub and rotor discs. The pawls are arranged to act as constraints to prevent axial displacement of the rotor disc relative to the hub. The system is designed to absorb some of the forces (stresses) that arise in the radial direction, some of the problems described above remain due to the axial constraints. A similar arrangement is disclosed in JP 05-81544-U.

GB 2,320,299 and GB2,340,564 describe vehicle disc brake arrangements, in which resilient force applicators are mounted between, and act directly on, a hub and annular brake disc in a radial direction, but without any coupling arrangement (e.g. pawls or bobbins) between the disc and the hub. The arrangement does not have or require any axial constraints because the hub has a relatively long axial extent (compared with the narrow discs).

The present invention has therefore been devised with the foregoing in mind. The invention seeks to overcome or ameliorate at least one of the disadvantages of the prior art, or provide a useful alternative.

### Summary of the Invention

According to a first aspect of the present invention there is provided a brake disc for a motorcycle as set forth in claim 1.

Embodiments of the brake disc comprise a carrier for fixing to a motorcycle wheel and an annular rotor located radially outwardly of, and arranged coaxially with, the carrier for engaging with a pair of brake pads. A coupling arrangement is disposed between the carrier and the rotor and is configured to support the rotor on the carrier such that limited relative axial movement between the rotor and the carrier can occur. A biasing means is configured to act radially to bias the rotor away from the carrier. The biasing means is disposed between the coupling element and at least one of the carrier and the rotor. This has the advantage that the development of disc thickness variation is reduced which in turn helps to avoid brake judder.

The rotor and the carrier may be connected in a floating state. This has the advantage that mechanical stresses due to thermal expansion are reduced.

There may be a gap between the rotor and the carrier. This avoids the rotor and carrier coming into contact with each other when the brake is applied.

The coupling element and biasing means may be located at an outer peripheral edge of the carrier.

The biasing means may bias the coupling element away from the carrier. This has the advantage that the rotor is prevented from rattling on the bobbins and the carrier when the wheel rotates and the brake is not applied. Further, the biasing means acts with the centrifugal force acting on the coupling element.

The biasing means may be located between the carrier and the coupling element.

The biasing means may bias the coupling element towards the carrier. This has the advantage that the rotor is prevented from rattling on the bobbins and the carrier when the wheel rotates and the brake is not applied.

The biasing means may be located between the rotor and the coupling element.

The rotor and the carrier may have recesses to house the biasing means and coupling element.

The brake disc may further comprise a plurality of coupling elements and associated biasing means spaced circumferentially around the brake disc. This has the advantage that the rotor can be supported at several locations around the circumference of the brake disc and the rotor can be radially biased in several directions which maintains the gap between the rotor and the carrier at all circumferential locations of the biasing means when no brake is applied.

The biasing means may be one of a leaf spring, an S spring, an omega spring, a coil spring or a circlip. These are simple ways to provide a biasing force.

The coupling element comprises a bobbin and a washer. This has the advantage of holding the biasing means in position.

According to a second aspect of the present invention there is provided a motorcycle comprising a brake disc as set forth in claim 13.

According to a third aspect of the present invention there is provided a kit of parts for a brake disc as set forth in claim 14.

### Brief Description of the Drawings

Embodiments of the invention will now be described, by way of example only, with reference to the accompanying drawings in which:
Figure 1 shows a front view of a known floating brake disc including bobbins;
Figure 2 shows a cross section view taken through a bobbin of the known floating brake disc of Figure 1;
Figure 3 shows a perspective view of a bobbin, washer and spring of the known floating brake disc of Figure 1;
Figure 4 shows a perspective view of a brake disc in accordance with an embodiment of the present invention;
Figure 5 shows a perspective view of a bobbin, washer and spring of the embodiment of Figure 4;
Figure 6 shows a radial cross section view taken through a bobbin in position in the brake disc of the embodiment of Figure 4;
Figure 7 shows a close up rear view of a bobbin and spring in position in the brake disc of the embodiment of Figure 4;
Figure 8 shows a close up rear perspective view of a bobbin and spring in position in the brake disc of the embodiment of Figure 4;
Figure 9 shows a close up rear perspective view of a bobbin and spring in position in accordance with an embodiment of the present invention;
Figure 10 shows a close up rear perspective view of a bobbin and spring in position in accordance with an embodiment of the present invention.

### Description of the embodiments of the invention

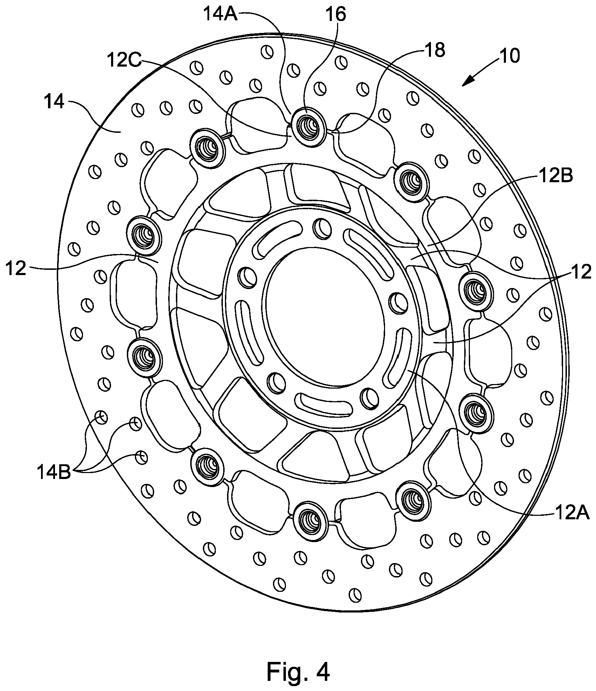

Figure 4 shows a brake disc 10 including a carrier 12 and a rotor 14 which are joined by coupling elements, e.g. bobbins 16. The carrier 12 forms a central hub and the annular rotor 14 is located radially outwardly of, and coaxial with, the carrier 12. The bobbins 16 support the rotor 14 on the carrier 12. Typically the thicknesses of the carrier 12 and of the rotor 14 may each be about 5mm. The brake disc 10 is a floating brake disc, i.e. the carrier 12 and the rotor 14 are connected in a floating state. This means that the rotor 14 floats separately from the carrier 12, i.e. the brake disc is not of one piece and the two separate parts are not rigidly fixed together. When the rotor 14 is subjected to frictional heat it can freely expand and contract again to limit mechanical stresses of the brake disc 10. The bobbins 16 help maintain axial alignment between the carrier 12 and the rotor 14 but allow some axial movement to counter installed run out and allow alignment of the rotor between the brake pads. Leaf springs 18 are included to provide a radial force to push the rotor 14 away from the centre of the brake disc 10. The leaf springs 18 also help maintain axial alignment between the carrier 12 and the rotor 14. The rotor is effectively suspended on the bobbins 16 and the leaf springs 18. The carrier 12 is made of aluminium and the rotor 14 is made from stainless steel. In this embodiment a leaf spring is used, but, in other embodiments, any spring, or biasing means, that provides a radial force could be used. In other embodiments, the carrier could be made from other materials, such as titanium and/or magnesium. In other embodiments the rotor could be made from other materials, such as cast iron or carbon fibre.

In use, the carrier 12 is rigidly fixed to a wheel (not shown). Brake pads (not shown) are pressed against the rotor 14 when the brake is applied and the friction between the pads and the rotor 14 acts to slow the rotation of the rotor 14. The bobbins 16 transmit the torque between the rotor 14 and the carrier 12. Thus, the rotation of the carrier 12, and the rotation of the wheel, is also slowed down when the brake is applied. Brake torque is also transmitted through the leaf spring 18. In other embodiments, brake torque is not transmitted though the biasing means, for example when the biasing means is an S-spring.

The carrier 12 has an inner ring 12A and an outer ring 12B. A plurality of arms 13 extend angularly with respect to the radial direction between the inner ring 12A and an outer ring 12B of the carrier 12. These arms 13 define spaces in the carrier 12 which reduce the weight of the carrier 12 but still provide the strength and rigidity required. In other embodiments, the carrier may not be lightened and may be solid piece having no spaces. Extending radially outwardly from the outer ring 12B to an outer peripheral edge of the carrier 12 are carrier coupling portions 12C. The rotor 14 has corresponding rotor coupling portions 14A that extend inwardly to an interior edge of the rotor 14. The bobbins 16 are located between the carrier coupling portions 12C and the rotor coupling portions 14A. Further spaces are defined between the carrier 12 and the rotor 14 by the carrier coupling portions 12C and the rotor coupling portions 14A. Holes 14B are provided in the rotor 14 around its circumference to assist with heat dissipation. In this embodiment, there are ten bobbins. The number of bobbins is not essential and, in other embodiments, there may be a different number of bobbins.

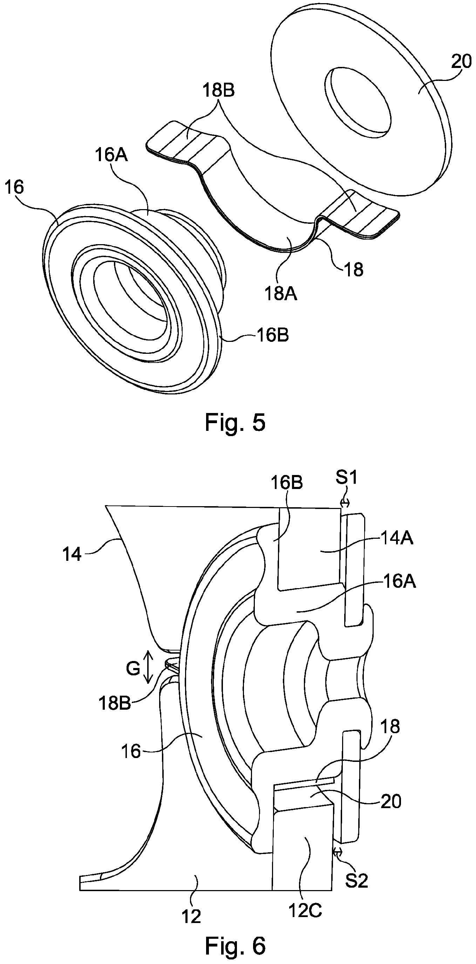

The bobbin 16, a corresponding washer 20 and the leaf spring 18 are shown in more detail in Figure 5. The bobbin 16 has a cylindrical body 16A with a flange 16B around its circumference at one end and an opposite end for affixing the washer 20 that holds the bobbin 16 in place on the brake disc 10. The bobbin 16 is made from stainless steel.

Figure 6 is a radial cross section taken through the centre of the bobbin 20 in position on the brake disc 10 and shows the bobbin 16 is riveted to retain the washer 20 in place. A gap G is shown between the peripheral edge of the carrier 12 and the interior edge of the rotor 14. The body 16A of the bobbin 16 is axially longer than the thickness of the rotor 14 and the carrier 12. Thus, there is a space S1 between the washer 20 and the rotor 14 and a space S2 between the washer and the carrier 12. This enables axial movement of the rotor 14 relative to the carrier 12 to occur if required to allow correction of installed run out and alignment of the rotor 14 between the brake pads. In Figure 6, the spaces S1 and S2 are shown to be the same size between the washer 20 and both the rotor 14 and the carrier 12 but it is clear that there could also, or alternatively, be spaces between the flange 16B and either, or both, of the rotor 14 and the carrier 12. As explained in more detail later, the provision of these spaces allow the rotor 14 to move relative to the carrier 12 when the brake is activated so that the rotor 14 is positioned in the middle of the brake pads. In other embodiments, the bobbin could be held in position by a circlip. In other embodiments, the bobbin could be made from cast iron or any other suitable material. In other embodiments, the body of the bobbin could be elliptical or any other suitable shape.

Referring to Figure 5 once more, the leaf spring 18 is made from a single strip of rectangular cross section and has a semi-circular central portion 18A and two outer portions 18B which are bent to provide the spring characteristics. The leaf spring 18 is configured to be fitted between the carrier 12 and the rotor 14 and is sized accordingly. The circumference of the semi-circular central portion 18A of the leaf spring 18 is larger than the circumference of the body 16A of the bobbin 16 which helps provide the spring restoring force when the leaf spring 18 is in position on the brake disc 10. The leaf spring 18 is made from stainless steel. In other embodiments, the leaf spring could be made from any suitable material that provides the required strength and radial force. In other embodiments, there could be a notch provided at the middle of the central portion 18A to engage with the bobbin 16. In other embodiments, there could be two or more springs for each bobbin or the spring could be located fully around the bobbin.

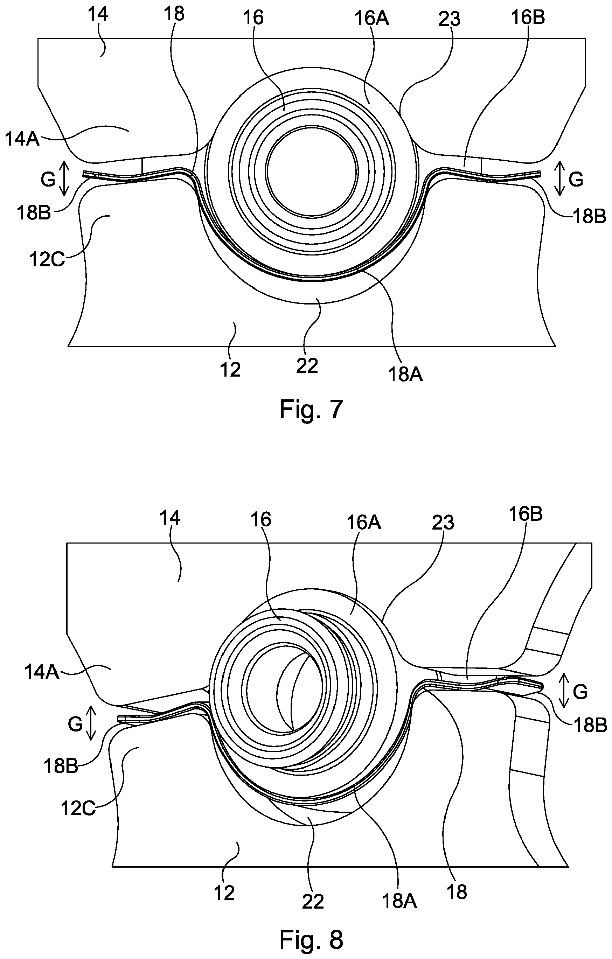

Figure 7 shows the bobbin 16, leaf spring 18 located on the brake disc 10. The bobbin 16 is positioned between the carrier 12 and the rotor 14. More particularly, the bobbin 16 is located between the carrier coupling portion 12C and the rotor coupling portion 14A. Further, the bobbin 16 is housed in semi-circular recesses, a carrier recess 22 in the peripheral edge of the carrier 12 and a rotor recess 23 in the interior edge of the rotor 14. The carrier recess 22 is slightly larger than the rotor recess 23 in order to accommodate the leaf spring 18. The flange 16B of the bobbin 16 and the washer 20 (not shown) hold the leaf spring 18 in position on brake disc 10.

The leaf spring 18 is located between the carrier 12 and the rotor 14. That is, the leaf spring is located between the opposing faces of the carrier coupling portion 12C and the rotor coupling portion 14A. More particularly, the leaf spring 18 is located between the bobbin 16 and the carrier 12. The central portion 18A of the leaf spring 18 is positioned in the carrier recess 22 with the semi-circular central portion 18A following the shape of the body 16A of the bobbin 16. The two outer portions 18B are located in the gap G between the peripheral edge of the carrier 12 and the interior edge of the rotor 14. The gap G is provided for manufacturing and assembly reasons, i.e. to allow for manufacturing tolerances and to enable the rotor 14 to be fitted over the carrier 12. The size of the gap G is variable. The gap G increases when the rotor 14 heats up due to friction and reduces once more when the rotor 14 cools down and the gap G is sized such that the interior edge of the rotor 14 never touches the peripheral edge of the carrier 12. Further, if the brake has a single calliper at one side of the brake disc 10, then, when the brake is engaged, the rotor will be pulled slightly towards the carrier, making the gap G larger at one point and smaller at the opposite side. In other embodiments, the leaf spring 18 is located between the bobbin 16 and the rotor 14, with the central portion 18A of the leaf spring 18 being positioned in the rotor recess 23.

The semi-circular central portion 18A of the leaf spring 18 is located around part of the body 16A of the bobbin 16 with the two outer portions 18B of the leaf spring 18 extending in the plane of the brake disc 10 away from the bobbin 16. The leaf spring 18 has two major bends, respectively located at the sections where the outer portions 18B begin to extend away from the semi-circular central portion 18A, and two minor bends, respectively located nearer the ends of the leaf spring 18 where the two outer portions 18B have flat sections. The two outer portions 18B are pressed against the coupling carrier coupling portion 12C at the two minor bends.

Figure 8 shows the bobbin 16 and leaf spring 18 located between the carrier 12 and the rotor 14 on the brake disc 10. The leaf spring 18 is located within the lateral confines of the gap G and the recesses, i.e. the width of the leaf spring 18 is less than, or approximately equal to, the thickness of the carrier 12 and the rotor 14. The axial length of the bobbin 16 is greater than the thickness of the brake disc 10 so extends outwith the lateral confines of the recesses.

In use, the leaf spring 18 acts radially to push the rotor 14 away from the carrier 12 and thus away from the centre of the brake disc 10. Referring back to Figure 4, each of the bobbins 16 is disposed circumferentially around the carrier 12, and has an associated leaf spring 18. Each leaf spring 18 located around the circumference acts radially and thus the rotor 14 is pushed away from the carrier 12 around its full circumference. The two outer portions 18B of the leaf spring 18 press against the rotor 14 and the carrier 12 as described above which biases the rotor 14 away from the carrier 12. Thus, the gap G between the rotor 14 and the carrier 12 is always maintained at all circumferential locations of the bobbins 16 when no brake is applied.

Further, the leaf spring 18 pushes the bobbin 16 outwardly against the rotor 14. This acts with the centrifugal force throwing the bobbins 16 outwardly when the brake disc is rotating and so the leaf springs 18 do not need to act against the centrifugal force. In other embodiments, the leaf spring 18 may be located between the rotor 14 and the bobbin 16 and thus will push the bobbin 16 inwardly against the carrier 12. This also has the effect of radially biasing the rotor 14 away from the carrier 12, which prevents or reduces the development of disc thickness variation (DTV).

Replacing an axial bobbin spring with a radial bobbin leaf spring 18 allows the rotor 14 to run true within the brake pads to correct installed run out without the rotor 14 rattling on the bobbins 16 and carrier 12 when the brake is not applied. Thus, the pushing of the rotor 14 away from the carrier 12 leads to a reduction in the development of disc thickness variation (DTV). DTV can arise from installed brake disc run out which can occur due to manufacturing tolerances. Installed brake disc run out means that the brake disc 10 wears unevenly (i.e. DTV occurs) which increases brake torque variation and can lead to brake judder, which is undesirable. Further, the rotor 14 is prevented from rattling on the bobbins 16 and the carrier 12 when the wheel rotates and the brake is not applied.

If a rotor is not located in the middle of brake pads, then one of the brake pads would touch the rotor before the other brake pad when the brake is activated. Where axial movement of the rotor with respect to the carrier is allowed, the rotor will move slightly when the brake pads are engaged to the position in the middle of the brake pads. However, with axial springs, when the brake pads are released they would still be drag between the brake pads and the rotor at peaks of run out which in turn leads to DTV.

Replacing an axially acting spring 5, as in known floating brake discs 1 of Figures 1-3, with the radially acting leaf springs 18, means that the brake discs 10 are not being actively pushed axially when the brake is not activated. The radial leaf springs 18 allow for small axial movements between the rotor 14 and the carrier 12 if required when the brake pads are engaged on the rotor 14. When the brake pads and rotor 14 meet, the rotor 14 is axially moved to the position in the middle of the brake pads if required. The radially acting leaf spring 18 means that the rotor 14 will continue to stay in this location with respect to the brake pads even when the brake is released. That is, the leaf spring 18 helps maintain the axial alignment between the rotor 14 and the carrier 12. Thus, the rotor 14 is not pushed axially away from the optimum middle position between the brake pads when the brake is released. This means that the dragging of the brake pads against the rotor 14 is avoided which in turn reduces the development of DTV.

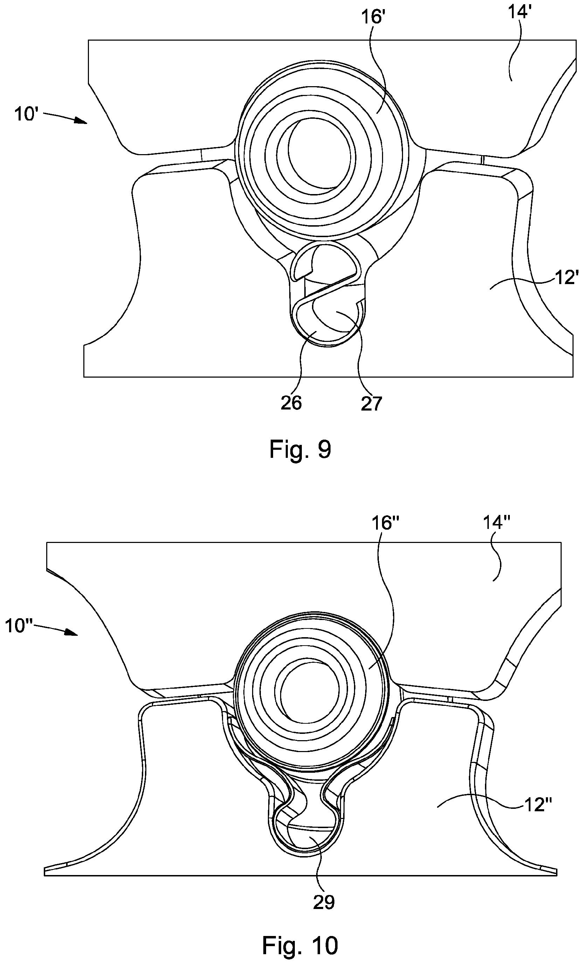

As mentioned above, the exact form of the biasing means is not critical and as long as the rotor 14 is biased away from the carrier 12 in some manner, whilst allowing free axial movement, then the benefits of the invention can be realised. Examples of other embodiments having an S spring and an omega spring are depicted in Figures 8 and 9 respectively. In other embodiments, the biasing means could be a coil spring, a circlip or any other spring element.

Figure 9 shows an S spring 26 located on a brake disc 10'. A bobbin 16' and washer 20' is also shown located between a carrier 12' and a rotor 14'. The S Spring 26 has the same purpose as the leaf spring 18 and differs only in the precise way in which it acts to radially push the rotor 14' away from the carrier 12'. In this case, an additional recess 27 is provided in the rotor 14' to house the S spring 26 and the S spring 26 acts on the bobbin 16' to push the bobbin 16' towards the carrier 12'. In other embodiments, the additional recess 27 could be located in the carrier 12' and the S spring 26 could act to push the bobbin 16' away from the carrier 12'.

Figure 10 shows an omega spring 28 located on a brake disc 10". A bobbin 16" and washer 20" is also shown located between a carrier 12" and a rotor 14". The omega spring 28 has the same purpose as the leaf spring 18 and differs only in the precise way in which it acts to radially push the rotor 14" away from the carrier 12". In this case, a further recess 29 is provided in the rotor 14" to house the omega spring 28 and the omega spring 28 acts on the bobbin 16" to push the bobbin 16" towards the carrier 12". In other embodiments, the further recess 29 could be located in the carrier 12" and the omega spring 28 could act to push the bobbin 16" away from the carrier 12".

## Claims

1. A brake disc for a motorcycle comprising:
a carrier for fixing to a motorcycle wheel;
an annular rotor located radially outwardly of, and arranged coaxially with, the carrier for engaging with a pair of brake pads;
a coupling arrangement disposed between the carrier and the rotor configured to support the rotor on the carrier such that limited relative axial movement between the rotor and the carrier can occur, and
a biasing means configured to act radially to bias the rotor away from the carrier, the biasing means disposed between the coupling element and at least one of the carrier and the rotor.

2. The brake disc of claim 1, wherein the rotor and the carrier are connected in a floating state.

3. The brake disc of any preceding claim, wherein there is a gap between the rotor and the carrier.

4. The brake disc of any preceding claim, wherein the coupling element and biasing means are located at an outer peripheral edge of the carrier.

5. The brake disc of any preceding claim, wherein the biasing means biases the coupling element away from the carrier.

6. The brake disc of any preceding claim, wherein the biasing means is located between the carrier and the coupling element.

7. The brake disc of any of claims 1-4, wherein the biasing means biases the coupling element towards the carrier.

8. The brake disc of any of claims 1-7 or 10, wherein the biasing means is located between the rotor and the coupling element.

9. The brake disc of any preceding claims, wherein the rotor and the carrier have recesses to house the biasing means and coupling element.

10. The brake disc of any preceding claim, comprising a plurality of coupling elements and associated biasing means spaced circumferentially around the brake disc.

11. The brake disc of any preceding claim, wherein the biasing means is one of a leaf spring, an S spring, an omega spring, a coil spring or a circlip.

12. The brake disc of any preceding claim, wherein the coupling element comprises a bobbin and a washer.

13. A motorcycle comprising a brake disc according to any preceding claim.

14. A kit of parts for a brake disc comprising:
an annular rotor;
a coupling element, and
a biasing means as defined in any of claims 1-12.

15. The kit of parts of claim 14 further comprising:
a carrier as defined in any of claims 1-12.
